# FASCICULE DE BREVET EUROPEEN

(11) **EP 1 495 691 B1**
(45) Date de publication et mention de la délivrance du brevet: **05.12.2007**
(21) Numéro de dépôt: 04014446.1
(22) Date de dépôt: 21.06.2004
(51) Int. Cl.: A43C 7/00

(54) **Bloqueur de lacet**
Klemmvorrichtung für Schnürsenkel
Holding-device for laces

(30) Priorité: 10.07.2003 FR 0308445
(43) Date de publication de la demande: 12.01.2005
(73) Titulaire: Salomon S.A., 74370 Metz-Tessy (FR)
(72) Inventeur: Borsoi, Bruno, 31029 Vittorio Veneto (Treviso) (IT)

(56) Documents cités:
- FR-A- 2 706 743
- US-A- 2 200 895
- US-A- 5 471 713
- US-A- 5 894 639

## Description

L'invention concerne un dispositif mécanique de blocage de brins souples tels que des câbles, des cordes, des fils, des lacets, ou tout autre produit présenté sous un aspect similaire.

L'invention a trait plus particulièrement au blocage des lacets de chaussures.

L'invention concerne plus particulièrement encore le domaine du sport, et notamment les chaussures de surf sur neige ou snowboard, de ski de piste, de ski de fond, de vélo, de randonnée, de marche, ou autre.

Il est connu de bloquer des brins souples à l'aide d'un dispositif.

Par exemple le document FR 2 706 743 divulgue un dispositif de blocage agissant pour au moins un fil. Selon ce document le dispositif comporte un poussoir définissant l'axe de rotation d'un organe de blocage, ainsi qu'un corps creux dont une cavité définit d'une part au moins un chemin de passage pour chaque brin de fil, et d'autre part un logement de l'organe de blocage. Ce dernier est de forme circulaire et libre en rotation autour de l'axe lui-même mobile en translation.

Le dispositif selon le document FR 2 706 743 fonctionne par coopération de l'organe de blocage avec chaque chemin pour le blocage de chaque brin de fil par effet de coincement. L'organe de blocage est sollicité élastiquement dans le sens de blocage du ou des brins de fil par action sur son axe de rotation.

Ainsi, bien qu'étant sollicité élastiquement, l'organe de blocage demeure libre en rotation et permet d'équilibrer les tensions sur les deux brins du fil même en cas de différence entre les efforts exercés sur les brins. Le blocage est donc toujours réalisé.

L'opération inverse, celle de déblocage, est obtenue par action manuelle sur le poussoir contre la sollicitation élastique.

Il est apparu que l'opération de déblocage n'est pas toujours facile.

En effet dans un souci de compacité le poussoir est plaqué contre le corps creux. Cela impose à un utilisateur de maintenir le corps creux en même temps qu'il déplace le poussoir lorsqu'il veut débloquer le lacet. Le maintien du corps conjugué au déplacement du poussoir est une opération relativement difficile. Cette opération est d'autant plus difficile que la taille du dispositif est réduite.

De plus le dispositif est souvent logé dans un endroit peu accessible et peu volumineux. C'est le cas par exemple pour certaines applications au domaine de la chaussure avec rabats, le dispositif prenant place dans un espace entre des rabats. Il s'ensuit que l'accessibilité au dispositif est réduite, ce qui contribue à la difficulté pour actionner le poussoir.

Enfin le déblocage est encore moins facile quand l'utilisateur porte des gants, car ces derniers gênent les manipulations du dispositif.

Le document US 5 471 713 décrit un dispositif selon le préambule de la revendication 1.

Chacun des facteurs ci-avant énumérés peut contribuer à gêner l'opération de déblocage.

L'un des buts de l'invention est de faciliter l'opération de déblocage, pour un dispositif muni d'un organe de blocage circulaire sollicité élastiquement.

Pour ce faire l'invention propose un dispositif de blocage comme décrit dans la revendication 1.

D'autres caractéristiques et avantages de l'invention seront mieux compris à l'aide de la description qui va suivre, en regard du dessin annexé illustrant, selon des exemples non limitatifs, comment l'invention peut être réalisée, et dans lequel :
- la figure 1 est une vue d'ensemble d'une chaussure comportant, notamment, un lacet et un bloqueur selon un premier exemple de réalisation de l'invention,
- la figure 2 est une vue du bloqueur de la figure 1 en perspective éclatée,
- la figure 3 est une vue extérieure de dessus du bloqueur en position de coincement des fils,
- la figure 4 est une vue extérieure, similaire à la figure 3, du bloqueur en position de déblocage des fils,
- la figure 5 est une vue en coupe, selon les lignes de contact des fils et des chemins, du bloqueur en position de coincement des fils,
- la figure 6 est une vue similaire à la figure 5 du bloqueur en position de déblocage des fils,
- la figure 7 est une vue en coupe du bloqueur selon VII-VII de la figure 3,
- la figure 8 est une vue en coupe du bloqueur selon VIII-VIII de la figure 7,
- la figure 9 est une vue similaire à la figure 2, selon un exemple de réalisation qui ne fait pas partie de l'invention,
- la figure 10 est une vue en perspective d'éléments internes d'un bloqueur selon un second exemple de réalisation de l'invention,
- la figure 11 est une vue en perspective d'un bloqueur selon un exemple de réalisation qui ne fait pas partie de l'invention.

Bien que les exemples décrits après se rapportent plutôt au domaine du snowboard, il doit être compris qu'ils s'appliquent aussi à d'autres domaines comme évoqué avant.

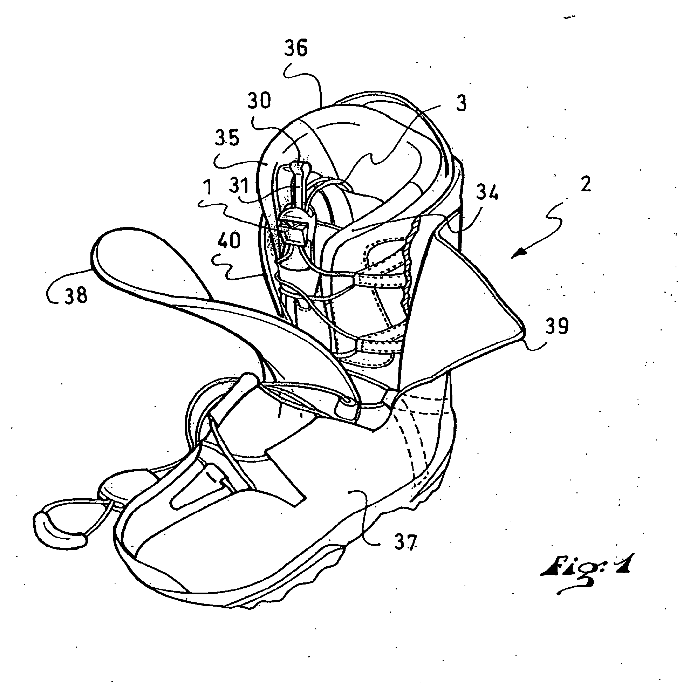

Le premier exemple est présenté à l'aide des figures 1 à 8.

Un bloqueur de lacet 1 est montré à la figure 1 pour une application à une chaussure de snowboard 2, pour le blocage d'un lacet 3.

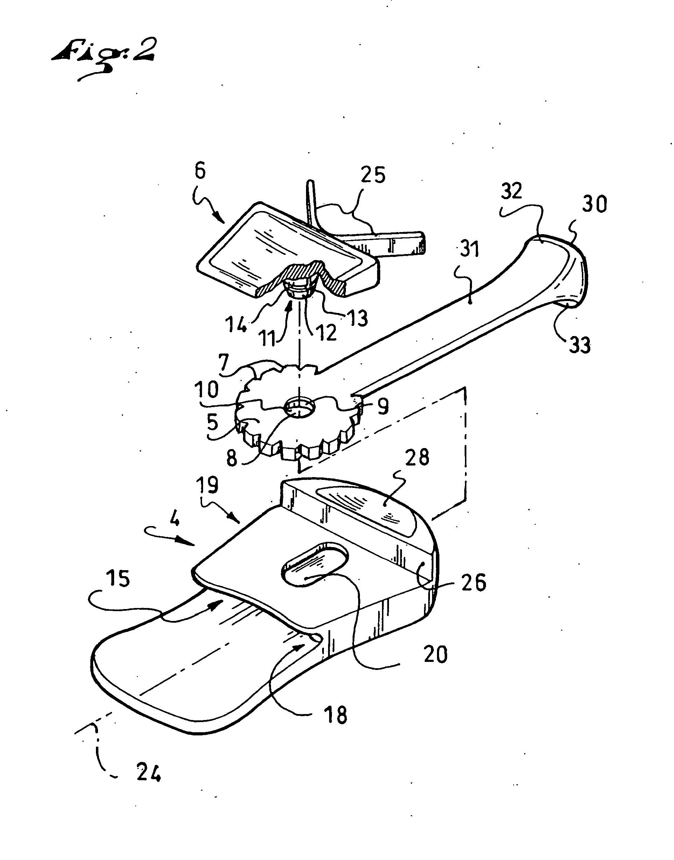

Comme le montre plus particulièrement la figure 2, le bloqueur 1 comprend trois pièces qui sont un corps 4, un organe de blocage 5 de forme circulaire et un curseur 6 situé à l'extérieur du corps 4 et relié à l'organe de blocage 5 pour la manoeuvre de celui-ci.

De préférence, l'organe de blocage 5 est constitué par une roue munie de dents 7 sur sa périphérie.

Le centre de la roue 5 est percé par un trou 8 aligné à un lamage 9 pour définir un oeil 10 de réception par encliquetage d'un axe 11 du curseur, qui constituera l'axe de rotation de la roue 5.

L'axe 11, circulaire et directement issu du curseur, a un côté sortant 12 destiné à la liaison avec la roue 5.

Ce côté est muni d'une fente 13 axiale sur une partie de sa longueur et est creusé par une gorge 14 périphérique d'accueil destinée à recevoir la roue 5.

L'extrémité du côté sortant a la forme d'un tronc de cône.

Cette structure permet l'assemblage par encliquetage de la roue 5 sur l'axe 11.

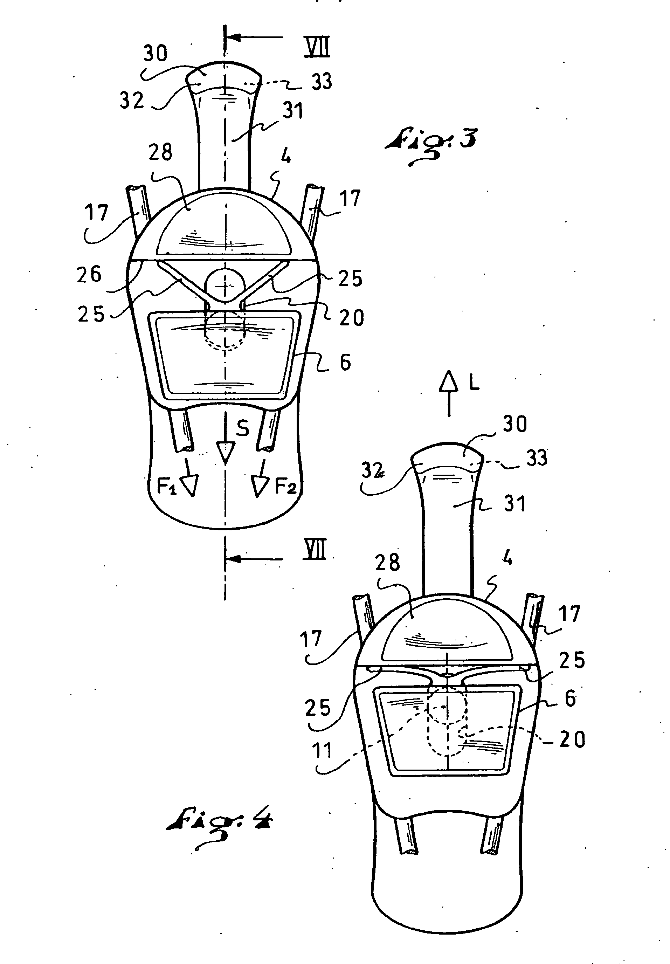

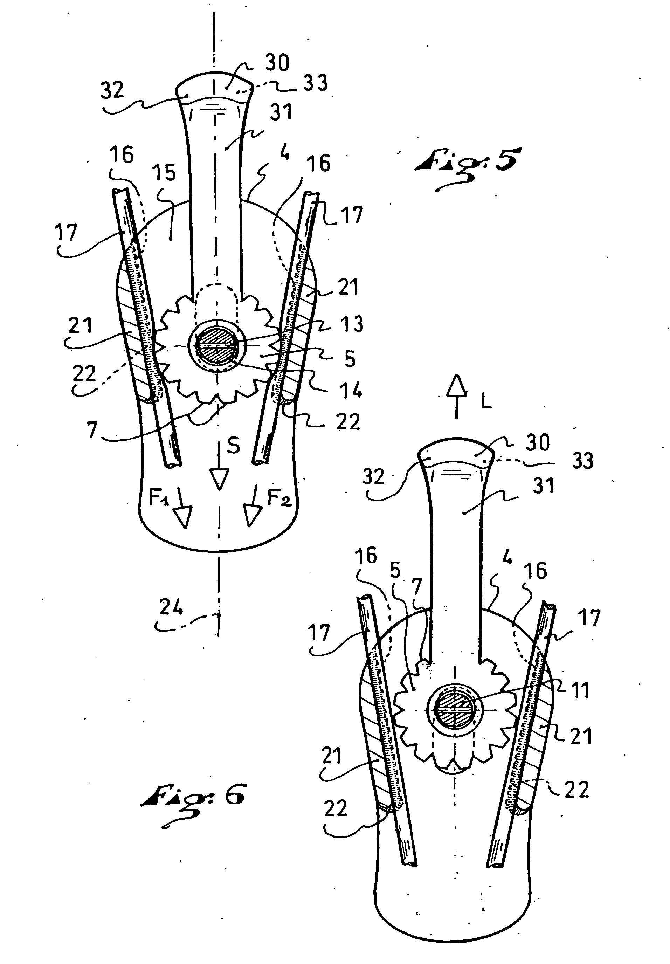

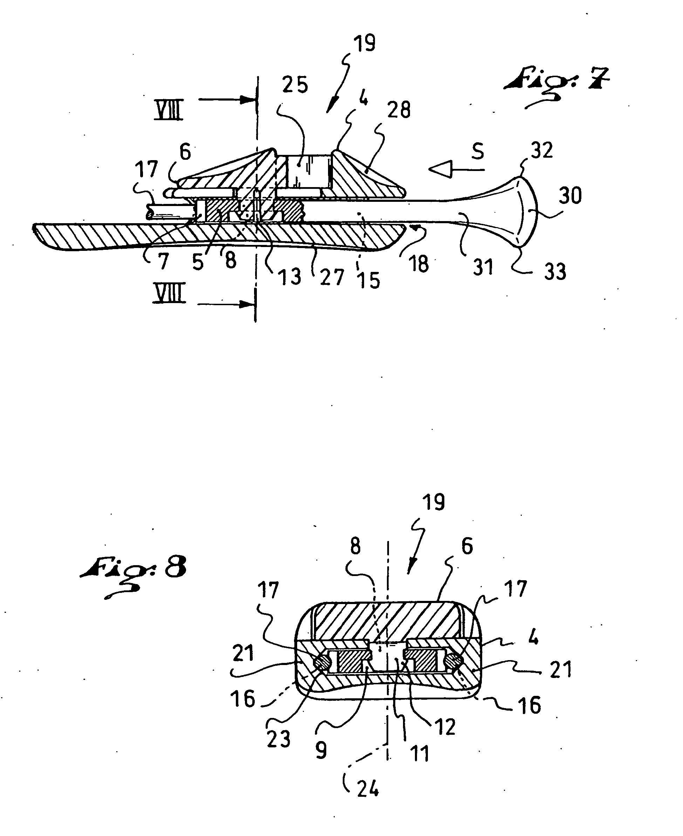

Le corps 4, tel que le montre la figure 5, comporte intérieurement une cavité 15 destinée au logement de la roue dentée 5 et définissant, ainsi qu'on le verra plus loin, deux chemins 16 pour le passage et le coincement des brins de fil 17.

Pour le montage du bloqueur 1 dans le corps 4, la roue 5 est mise en place à l'intérieur de la cavité 15 du corps 4 en passant par une ouverture 18 prévue à une extrémité axiale de ce corps, et le curseur est encliqueté par son axe 11 dans l'oeil 10 de la roue 5 en traversant la paroi de la face supérieure 19 du corps 4 par une fente 20, ménagée dans cette face supérieure 19 selon une direction longitudinale axiale du corps.

Le curseur 6 ainsi monté est mobile en translation par rapport au corps 4, dans la fente 20 et dans la direction longitudinale dudit corps 4, selon les sens des flèches "L" ou "S" montrées par exemple sur les figures 3 et 4.

Les dimensions de la gorge 14 et du trou 8 de la roue 5 sont prévues de façon que la roue 5 soit montée libre en rotation autour de l'axe 11.

Les figures 5, 6, 7 et 8 montrent plus particulièrement la réalisation des chemins 16 et la coopération de l'organe de blocage ou roue 5 avec ceux-ci.

Les chemins 16 sont situés dans la cavité 15, le long de chacune des deux faces latérales 21 du corps 4, et comportent des stries 22.

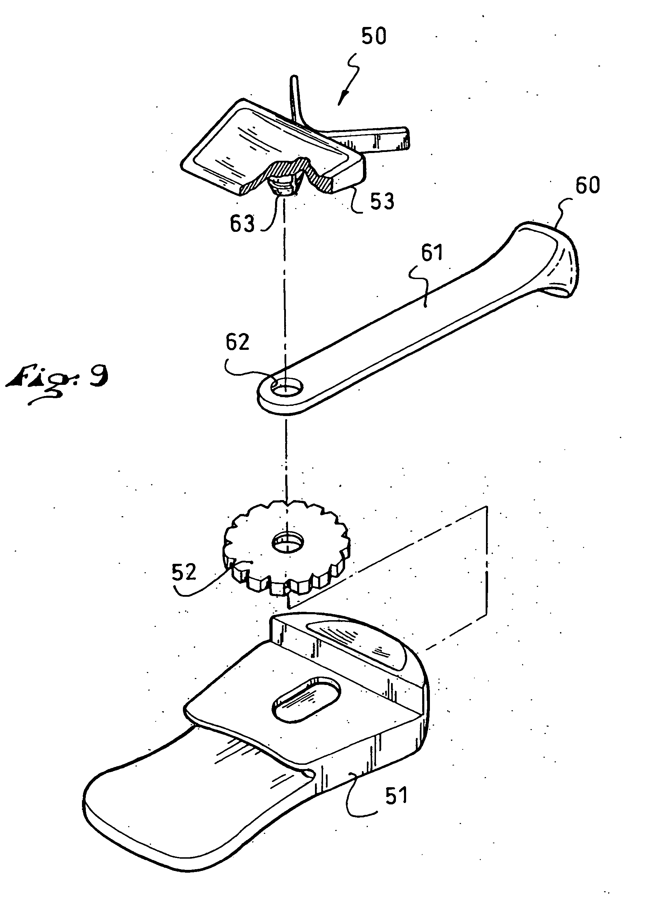

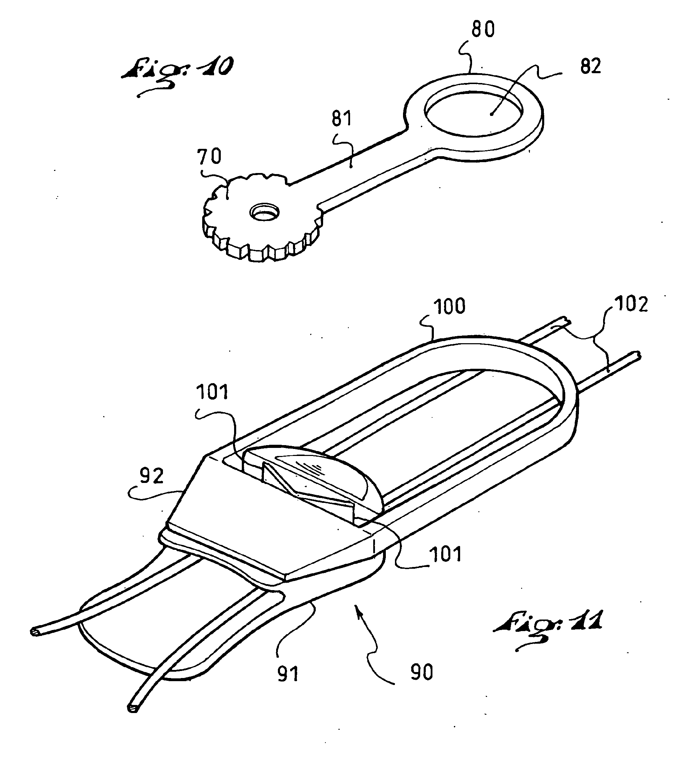

Les chemins 16 ont, pour recevoir les fils, une section en forme de gorge qui peut être arrondie ou formée de segments droits 23, comme représenté sur la figure 8.

Comme le montrent les figures 5 et 6, les chemins 16 sont sensiblement rectilignes et leurs directions non parallèles convergent pour se croiser sur l'axe de symétrie 24 du bloqueur 1, dans la direction "S".

Il existe deux positions extrêmes du curseur 6 qui correspondent l'une au blocage du lacet 3, l'autre déblocage du lacet 3.

La position de blocage est représentée notamment aux figures 1, 3, 5, 7 et 8.

Comme le montre la figure 5, en position de blocage, la roue 5, qui est sollicitée en permanence dans le sens "S", serre les brins des fils 17 en appuyant ces derniers au fond des chemins 16 du corps 4.

Le blocage des brins de fils 17 est donc réalisé par effet de coincement grâce à la coopération des chemins 16 et de la roue 5.

L'avantage, procuré par le blocage par effet de coincement, est que la valeur de serrage des brins de fils 17 par la roue 5 est proportionnelle aux efforts de traction exercés sur les brins et résulte uniquement de ces efforts.

Un autre avantage, lié au fait que la roue 5 est libre en rotation autour de l'axe 11, est qu'une différence dans les efforts de traction F1, F2 sur les deux brins de fil 17 n'entraîne pas un coincement du système ou un glissement relatif de l'un des brins par rapport à l'organe de blocage 5.

Un moyen élastique, montré notamment aux figures 2, 3, 4 et 7, est également intégré au bloqueur 1. Ce moyen élastique peut prendre différentes formes, selon le mode de réalisation préféré.

Le moyen élastique comprend deux languettes 25 élastiques qui s'étendent en forme de "Vé" à partir du centre du curseur 6, languettes 25 dont les extrémités libres sont prévues de façon à prendre appui sur un talon 26 formé par un rebord du corps 4 pour solliciter le curseur 6 dans la direction de blocage 5 montrée à la figure 3. Bien entendu les languettes 25 peuvent également avoir une forme différente.

Ces languettes 25 sollicitent donc également, dans cette direction de blocage "S", la roue 5 par l'intermédiaire de son axe 11 qui est solidaire du curseur 6.

Ainsi, l'organe de blocage 5 est sollicité élastiquement dans le sens de blocage des fils 17 par l'intermédiaire de son axe de rotation 11.

Selon un mode préféré de réalisation de l'invention, l'axe 11, le curseur 6 et les languettes 25 forment un élément unique.

Les pièces et le fonctionnement décrits ci-avant procurent l'avantage d'effectuer un blocage de fil précis et immédiat sans qu'il soit nécessaire d'agir extérieurement sur l'organe de blocage 5.

En complément, comme montré notamment aux figures 7 et 8, le corps 4 présente respectivement sur ses faces supérieure et inférieure des cavités 27, 28 destinées à faciliter la prise ergonomique du corps 4 lors du blocage.

Les empreintes des cavités 27, 28 du corps 4 correspondent chacune sensiblement à celle d'un doigt orienté de façon à exercer un effort dans la direction S.

Il est donc plus facile pour l'utilisateur de tirer sur le lacet 3 avec une main et d'appuyer sur le bloqueur 1 avec l'autre main pour le déplacer sur le lacet jusqu'à la position de blocage souhaitée.

Une fois cette position de blocage atteinte, il suffit de lâcher le bloqueur 1, sans avoir à exercer aucune autre action sur le curseur, pour que le serrage souhaité soit obtenu, la roue 5 sollicitée par les languettes 25 exerçant automatiquement l'effet de coincement souhaité.

L'avantage est que la manipulation de blocage est des plus aisées.

L'invention a notamment pour but de rendre l'opération de déblocage tout aussi aisée. Pour cela selon l'invention le bloqueur de lacet 1 est muni d'un organe de déblocage qui comprend une partie de préhension située à l'écart du corps creux 4. La partie de préhension permet d'attraper l'organe de déblocage sans qu'il soit nécessaire d'atteindre le corps du bloqueur.

Selon le premier exemple de réalisation de l'invention, comme on le voit sur la figure 2, la partie de préhension est une poignée 30. Cette dernière est assujettie à un manche 31, lui-même assujetti à l'organe de blocage ou roue 5. L'organe de déblocage comprend donc la poignée 30 et le manche 31.

De préférence la poignée 30, le manche 31 et la roue 5 forment une pièce monobloc, comprenant par exemple une matière plastique. L'avantage représenté par la pièce monobloc est une simplification de la fabrication, ainsi qu'une réduction des coûts de production. Cependant il peut être prévu qu'une partie au moins de ces pièces soit produites séparément, puis assemblées. Il peut aussi être prévu d'autres matériaux pour la fabrication.

Selon le premier exemple de réalisation de l'invention, la roue 5 et le manche 31 ont sensiblement la même épaisseur, la roue 5 et le manche 31 étant contenus dans un même plan. Cela permet, comme on le voit sur la figure 7, de faire se déplacer la pièce monobloc dans la cavité 15 à la manière d'un tiroir. Un avantage subséquent est une meilleure qualité dans le guidage de la pièce.

La poignée 30 quant à elle fait saillie, par exemple avec deux bossages opposés 32, 33, de part et d'autre du manche 31. Cela permet une préhension facile. Il est possible de la manipuler sans effort, notamment pour tirer. Bien entendu, la poignée 30 pourrait ne faire saillie que d'un côté du manche, voire présenter sensiblement la même épaisseur.

La manipulation de la poignée 30 est d'autant plus facile que le manche 31 la maintient à distance du corps creux 4. En effet, il subsiste de préférence un espace suffisamment étendu entre le corps creux 4 et la poignée, pour que la préhension se fasse en touchant seulement la poignée 30. Cela signifie par corollaire qu'il n'est pas nécessaire de maintenir le corps creux 4 pour manipuler la poignée 30, même s'il est possible de manipuler la poignée en tenant le corps creux.

Un avantage qui découle de cette construction est une meilleure accessibilité de l'organe de déblocage, même si le bloqueur 1 est utilisé sur une chaussure. En effet comme on le voit sur la figure 1, il est fréquent que le bloqueur 1 soit inséré entre des rabats latéral 34 et médial 35 d'un chausson 36. Comme ce dernier est lui-même couvert d'une enveloppe extérieure 37, le bloqueur 1 est aussi couvert par la languette 38, et entouré par les rabats latéral 39 et médial 40 de l'enveloppe 37. L'émergence de la poignée 30, ou au moins sa meilleure accessibilité, permet de tirer plus facilement pour débloquer la roue 5. Ainsi le chausson 36 peut être desserré facilement.

Une traction sur la poignée 30 dans le sens de la flèche L amène la roue 5 dans la position montrée sur les figures 4 et 6. La traction se fait contre l'action du moyen élastique qui comprend les languettes 25. Lorsque l'effort de traction ou de déblocage est suffisant, la roue 5 est écartée des chemins de fil 16 et des brins de fil 17. La roue 5 est éloignée du point de convergence des directions des chemins 16. L'effet de coincement n'a plus lieu et le déblocage est réalisé. Ainsi le bloqueur 1 et les brins de fil 17 peuvent coulisser l'un par rapport aux autres. Le coulissement se fait simultanément à la traction sur la poignée 30, car la roue 5 est reliée par l'axe 11 au corps creux 4. L'architecture du bloqueur 1 permet donc de solliciter directement l'organe de blocage ou roue 5 dans un sens de déblocage. Etant donné que l'effort de déblocage est transmis directement, le rendement lié au déblocage est le meilleur possible. Un avantage qui en découle est qu'un faible effort de traction suffit au déblocage.

L'effort de traction pour débloquer la roue 5 peut être exercé selon l'axe de symétrie 24 du bloqueur ou selon un axe décalé. En effet, le manche 31 laisse à la roue 5 une liberté limitée mais suffisante pour tourner en prenant appui sur les brins de fil 17 au moment du blocage. Cette liberté de rotation de la roue 5 est préservée malgré la présence du manche 31, parce que la distance entre le manche et chaque face latérale 21 est sensiblement plus grande que l'épaisseur d'un brin de fil 17.

D'autres exemples vont être décrits ci-après. Pour des raisons de commodité, seules les différences significatives par rapport au premier exemple seront mises en relief.

Le deuxième exemple ne faisant pas partie de l'invention est présenté à l'aide de la figure 9.

Selon cet exemple, un bloqueur 50 comprend un corps creux 51, un organe de blocage représenté sous la forme d'une roue 52, et un curseur 53. Ces éléments sont assemblés pour fonctionner d'une manière similaire au bloqueur du premier exemple.

Un organe de déblocage comprend une partie de préhension située à l'écart du corps creux 51.

La partie de préhension est représentée sous la forme d'une poignée 60, laquelle est assujettie à une manche 61. Ainsi l'organe de déblocage comprend la poignée 60 et le manche 61.

Une extrémité de liaison du manche 61, opposée à l'extrémité qui accueille la poignée, est percée d'un orifice 62. Ainsi le manche 61 et la roue 52 sont montés rotatifs sur le même axe 63 issu du curseur 53. En conséquence une traction sur la poignée 60, dans un sens d'éloignement du corps creux 51, sollicite la roue 52 dans un sens de déblocage. Là encore la sollicitation est directe, car l'axe 63 est commun à la roue 52 et au manche 61. La dissociation du manche 61 et de la roue 52 donne une totale liberté de rotation à cette dernière. Un avantage qui en découle est que l'usure des dents de la roue 52 est répartie sur toute sa périphérie.

Le troisième exemple ne faisant pas partie de l'invention est présenté à l'aide de la figure 10.

Selon cet exemple, un bloqueur comprend une roue 70.

Un organe de déblocage comprend une partie de préhension située à l'écart du corps creux.

La partie de préhension comprend une poignée 80, laquelle est assujettie à un manche 81. Là encore l'organe de déblocage comprend la poignée 80 et le manche 81. La roue 70, la poignée 80 et le manche 81 forment une pièce monobloc.

Dans le troisième exemple la poignée 80 est traversée par une ouverture 82. Celle-ci peut être suffisamment grande pour le passage d'un doigt, ce qui permet une préhension avec un doigt recourbé.

Le quatrième exemple ne faisant partie de l'invention est présenté à l'aide de la figure 11.

Selon cet exemple, un bloqueur 90 comprend un corps creux 91 et un curseur 92.

SUn organe de déblocage comprend une partie de préhension située à l'écart du corps creux.

La partie de préhension comprend une poignée 100, laquelle est assujettie au curseur 92. Ainsi l'organe de déblocage comprend cette fois la poignée 100 et le curseur 92. De préférence la poignée 100, le curseur 92 et des languettes 101 d'un organe élastique forment une pièce monobloc.

La poignée 100 s'apparente à une anse en saillie par rapport au corps creux 91, dans un sens de passage des brins de fil 101. La poignée 100 est décalée par rapport au plan de passage des fils.

D'une manière générale, l'invention est réalisée à partir de matériaux et selon des techniques de mise en oeuvre connus de l'homme du métier.

En particulier, il est préféré de réaliser chaque composant à partir d'une matière plastique.

Bien entendu l'invention comprend tous les équivalents techniques pouvant entrer dans la portée des revendications qui vont suivre.

En particulier il peut être prévu que la partie de préhension d'un organe de déblocage soit écartée du corps creux dans un sens sensiblement perpendiculaire au plan de passage des brins de fil. Par exemple, un manche et/ou une poignée peuvent être assujettis au curseur pour faire saillie par rapport à ce dernier.

## Revendications

1. Dispositif de blocage (1), agissant pour au moins un fil (17), comportant notamment un axe de rotation (11) pour un organe de blocage (5, 70), comportant également un corps creux (4) dont une cavité (15) définit d'une part au moins un chemin de passage (16) pour chaque brin de fil (17), et d'autre part un logement de l'organe de blocage (5, 70), cet organe de blocage (5, 70) étant de forme circulaire et libre en rotation autour de l'axe (11) lui-même mobile en translation, le dispositif (1), fonctionnant par coopération de l'organe de blocage (5, 70) avec chaque chemin (16) pour le blocage de chaque brin de fil (17), par effet de coincement, l'organe de blocage (5, 70) étant sollicité élastiquement dans le sens de blocage du ou des brins de fil (17), par action sur son axe de rotation (11), le dispositif (1), comprenant encore un organe de déblocage de l'organe de blocage (5, 70),
**caractérisé par le fait que** l'organe de déblocage comprend une partie de préhension (30, 100) située à l'écart du corps creux (4), la partie de préhension constituant un appendice en saillie par rapport au corps creux, la partie de préhension étant une poignée (30, 80), l'organe de déblocage comprenant la poignée (30, 80) et un manche (31, 81), la poignée (30, 80), le manche (31, 81) et la roue (5, 70) formant une pièce monobloc, la roue (5, 70) et le manche (31,81) étant contenus dans un même plan.

2. Dispositif de blocage (1) selon la revendication 1, **caractérisé par le fait que** la poignée (30) fait saillie par rapport au manche (31).

3. Dispositif de blocage (1) selon la revendication 1 ou 2, **caractérisé par le fait que** la poignée (80) est traversée par un ouverture (82).

4. Dispositif de blocage (1) selon l'une des revendications 1 à 3, **caractérisé par le fait que** la distance entre le manche (31, 81) et une face latérale (21) du corps creux (4) est sensiblement plus grande que l'épaisseur d'un brin de fil (17).

5. Dispositif de blocage (1) selon l'une des revendications 1 à 4, **caractérisé par le fait que** chaque composant du dispositif est réalisé à partir d'une matière plastique.

## Claims

1. A blocking device (1) adapted to act on at least one strand (17), comprising an axis of rotation (11) for a blocking member (5, 70), comprising also a hollow body (4), a cavity (15) of which defines at least one path (16) for passage of each strand (17) on the one hand, and a housing for the blocking member (5, 70), on the other hand; this blocking member (5, 70) having a circular shape, freely rotatable about the axis (11), and movable in translation, the device (1) functioning by cooperation of the blocking member (5, 70) with each path (16) for blocking each strand (17) through a wedging effect, the blocking member (5, 70) being elastically biased in a direction for blocking at least one strand (17) by acting on its axis of rotation (11), the device (1) comprising also a member for unblocking the locking member (5, 70), **characterized in that** the unblocking member comprises a gripping portion (30, 100) spaced from the hollow body (4), the gripping portion being an element projecting with respect to the hollow body, the gripping portion being a grip (30, 80), the unblocking member comprising the grip (30, 80) and a handle (31, 81), the grip (30, 80), the handle (31, 81), and the wheel (5, 70) forming a unitary element, the wheel (5, 70) and the handle (31,81) extending along a single plane.

2. Blocking device (1) according to claim 1, **characterized in that** the grip (30) projects with respect to the handle (31).

3. Blocking device (1) according to claim 1 or 2, **characterized in that** an opening (82) extends through the grip (80).

4. Blocking device (1) according to one of claims 1 to 3, **characterized in that** the distance between the handle (31, 81) and a lateral surface (21) of the hollow body (4) is substantially greater than the thickness of a strand (17).

5. Blocking device (1) according to one of claims 1 to 4, **characterized in that** each component of the device is made out of plastic material.

## Patentansprüche

1. Blockiervorrichtung (1), die für wenigstens eine Schnur (17) wirkt, insbesondere mit einer Drehachse (11) für ein Blockierelement (5, 70), ebenso mit einem Hohlkörper (4), bei dem ein Hohlraum (15) einerseits wenigstens einen Durchgang (16) für jedes Ende der Schnur (17) und anderseits einen Sitz für das Blockierelement (5, 70) definiert, wobei dieses Blockierelement (5, 70) kreisförmig und um die Achse (11) frei drehbar ist, die selber verschiebbar ist, wobei die Vorrichtung (1) durch das Zusammenwirken des Blockierelements (5, 70) mit jedem Durchgang (16) zum Blockieren jedes Schnurendes (17) per Klemmwirkung funktioniert, wobei das Blockierelement (5, 70) in Richtung des Blockierens des oder der Schnurenden (17) durch Einwirken auf dessen Drehachse (11) elastisch belastet wird, wobei die Vorrichtung (1) außerdem ein Element zum Lösen des Blockierelements (5, 70) umfasst,
**gekennzeichnet durch** die Tatsache, dass das Löseelement einen Greifabschnitt (30, 100) umfasst, der abseits vom Hohlkörper (4) liegt, wobei der Greifabschnitt einen im Verhältnis zum Hohlkörper hervorstehenden Fortsatz bildet, wobei der Greifabschnitt ein Griff (30, 80) ist, wobei das Löseelement den Griff (30, 80) und einen Stiel (31, 81) aufweist, wobei der Griff (30, 80), der Stiel (31, 81) und das Rad (5, 70) ein einziges Stück bilden, wobei das Rad (5, 70) und der Stiel (31, 81) in einer selben Ebene liegen.

2. Blockiervorrichtung (1) nach Anspruch 1, **gekennzeichnet durch** die Tatsache, dass der Griff (30) im Verhältnis zum Stiel (31) hervorsteht.

3. Blockiervorrichtung (1) nach Anspruch 1 oder 2, **gekennzeichnet durch** die Tatsache, dass der Griff (80) von einer Öffnung (82) durchquert wird.

4. Blockiervorrichtung (1) nach einem der Ansprüche 1 bis 3, **gekennzeichnet durch** die Tatsache, dass der Abstand zwischen dem Stiel (31, 81) und einer Seitenfläche (21) des Hohlkörpers (4) deutlich größer als die Dicke eines Schnurendes (17) ist.

5. Blockiervorrichtung (1) nach einem der Ansprüche 1 bis 4, **gekennzeichnet durch** die Tatsache, dass jede Komponente der Vorrichtung aus Kunststoff hergestellt ist.
